# EUROPÄISCHE PATENTANMELDUNG

(11) **EP 3 094 060 A1**
(43) Veröffentlichungstag der Anmeldung: **16.11.2016**
(21) Anmeldenummer: 16000866.0
(22) Anmeldetag: 16.04.2016
(51) Int. Cl.: H04L 29/06, H04W 12/08

(54) **VERFAHREN UND VORRICHTUNG ZUR SICHERUNG DER DATENKOMMUNIKATION VON EINEM MOBILTELEFON MIT DEM INTERNET UND ZUR ERHÖHUNG DER DATENKOMMUNIKATIONSTRANSPARENZ FÜR DEN ANWENDER**

(30) Priorität: 15.05.2015 DE 102015006282
(71) Anmelder: WebToGo Gmb, 81671 München (DE)
(72) Erfinder: Düsing, Peter, 80538 München (DE)
(74) Vertreter: Fuchs, Franz-Josef

(57) **Zusammenfassung**

Verfahren und Vorrichtung zur Sicherung der Datenkommunikation von einem Mobiltelefon mit dem Internet und zur Erhöhung der Datenkommunikationstransparenz für den Anwender.

Die Erfindung schafft ein Verfahren zur Sicherung der Datenkommunikation zwischen Mobiltelefonen und dem Internet, bei dem es dem Anwender ermöglicht wird, den Datenfluß von und zu seinem Mobiltelefon vollständig zu kontrollieren, unerwünschte Datenströme zu unterbinden, unerwünschte Applikationen zu terminieren und je nach Standort und Kosten verschiedene Datenströme und Datenmengen zu erlauben.

## Beschreibung

Verfahren und Vorrichtung zur Sicherung der Datenkommunikation von einem Mobiltelefon mit dem Internet und zur Erhöhung der Datenkommunikationstransparenz für den Anwender.

Die vorliegende Erfindung betrifft ein Verfahren zur Sicherung der Datenkommunikation mit dem Internet. Insbesondere wird dem Anwender ermöglicht, den Datenfluß von und zu seinem Mobiltelefon vollständig zu kontrollieren, unerwünschte Datenströme zu kontrollieren, unerwünschte Applikationen zu terminieren und je nach Standort und Kosten verschiedene Datenströme und Datenmengen zu erlauben.

Auf modernen Mobiltelefonen, sogenannten Smartphones, sind Datenverbindungen von großer Bedeutung. Ein Großteil der Anwendungen dieser Geräte erfordern eine Internetverbindung. Dabei ist die Nutzung durch die Vielzahl der verschiedenen Applikationen - "Apps" - geprägt, die entweder vorinstalliert sind oder vom Nutzer installiert werden und jeweils einzelne Anwendungsfälle erlauben. Während auf einem Computer meist nur eine überschaubare Anzahl von Applikationen häufigen Datenaustausch benötigt und ein großer Teil der Internetnutzung über den Browser stattfindet, werden auf dem Handy spezialisierte Apps für einzelne Anwendungsfälle, wie etwa die Wettervoraussage, verwendet. Welcher Datenaustausch hierbei stattfindet, bleibt für den Anwender in großem Maße unsichtbar. Betriebssysteme bieten inzwischen eine Übersicht über das gesamte verbrauchte Datenvolumen einer Applikation, aber sie unterscheiden weder nach Inhalt noch nach Ziel der versendeten Daten. Genausowenig ermöglichen sie eine zeitnahe Information wenn eine Applikation eine Datenverbindung aufbaut. Dem Anwender fehlt Kontrolle über Kosten und Art des Datenaustauschs.

Derweil beinhalten Mobiltelefone sehr persönliche und vertrauliche Daten, angefangen vom Adressbuch, über private Konversationen etwa über SMS oder WhatsApp, bis hin zum aktuellen Standort eines Menschen. Über das Mobiltelefon werden Bankgeschäfte getätigt, Bestellungen aufgegeben und für das Nutzungsverhalten der Anwender würden viele Firmen große Mengen Geld bezahlen. Es besteht also ein erhebliches Sicherheitsrisiko, dass Applikationen gegen den Willen der Anwender auf dem Mobiltelefon auf vertrauliche Daten zugreifen und diese über das Internet an den Anwender unbekannte Ziele übertragen.

Dieses Problem ist nicht neu und wird auf Computern üblicherweise mit bekannten "Personal Firewalls" gelöst. Ein Personal Firewall ist eine Anwendung, die auf einem Rechner installiert ist und den Datenfluss auf dem gleichen Rechner kontrolliert und typischerweise den Nutzer darüber in Kenntnis setzen.

Die aktuellen Betriebssysteme von Mobiltelefonen verfügen über Sicherheitsmechanismen, die derartige Personal Firewall Lösungen verhindern. Grundsätzlich dürfen installierte Applikationen nicht den Datenfluss von anderen Applikationen kontrollieren oder manipulieren. Im allgemeinen dürfen installierte Applikationen auch nicht auf die Daten anderer Applikationen zugreifen. Es ist jedoch üblich, dass Applikationen bei der Installation Rechte erteilt werden, wie etwa der Zugriff auf das Adressbuch oder auf die SMS-Anwendung. Der Anwender kann hier nicht zwischen einem legitimen Zugriff, wie etwa für den vereinfachten Versand einer Nachricht an einen Bekannten aus der Applikation heraus, und einem unbeabsichtigten Zugriff, wie der Übertragung des gesamten Adressbuchinhalts an einen Server im Internet unterscheiden.

Die Betriebssysteme eines Mobiltelefons könnten prinzipiell um die Funktionalität eines Personal Firewalls ausgebaut werden, um einen Teil dieser Sicherheitsrisiken einzuschränken. Um jedoch die bestmögliche Kontrolle über den Datentransfer zu erhalten muss eine Technologie verwendet werden, die nicht nur Sender und Empfänger sondern auch Inhalt der Datenpakete überprüft. Diese Technologie ist als "Deep Packet Inspection" bekannt. Dem Einsatz derartiger Technologie auf dem Mobiltelefon steht die eingeschränkte Prozessorleistung und Batteriekapazität gegenüber.

Nach dem derzeitigen Stand der Technik gibt es kein Verfahren, dass dem Nutzer die Art und das Volumen der Datenkommunikation in größerem Detail aufzeigt, als die oben beschriebenen unzulänglichen Anzeigen des Betriebssystems. Genausowenig ist es dem Nutzer möglich, aktiv die Datenflüsse zu regeln.

Die Aufgabe der hier vorliegenden Erfindung besteht darin, ein Verfahren zu schaffen, das dem Anwender die bestmögliche Transparenz über den Datenfluss von und zu seinem Mobiltelefon ermöglicht und hierbei auch dem technisch nicht versierten Nutzer einen sicheren Umgang mit dem Internet bei bestmöglicher Kostenkontrolle zu ermöglichen.

Die Erfindung löst diese Aufgabe durch ein Verfahren der eingangs genannten Art mit den kennzeichnenden Merkmalen des Patentanspruchs 1.

Bevorzugte Ausführungsbeispiele der vorliegenden Erfindung werden nachfolgend bezugnehmend auf die beiliegenden Figuren näher erläutert. Es zeigen:
Fig. 1 eine schematische Darstellung der verschiedenen Komponenten, die in der Basisausführung der vorliegenden Erfindung zusammen spielen;
Fig. 2 eine schematische Darstellung der verschiedenen Komponenten, die in einer bevorzugten Ausführung der vorliegenden Erfindung zusammen spielen;

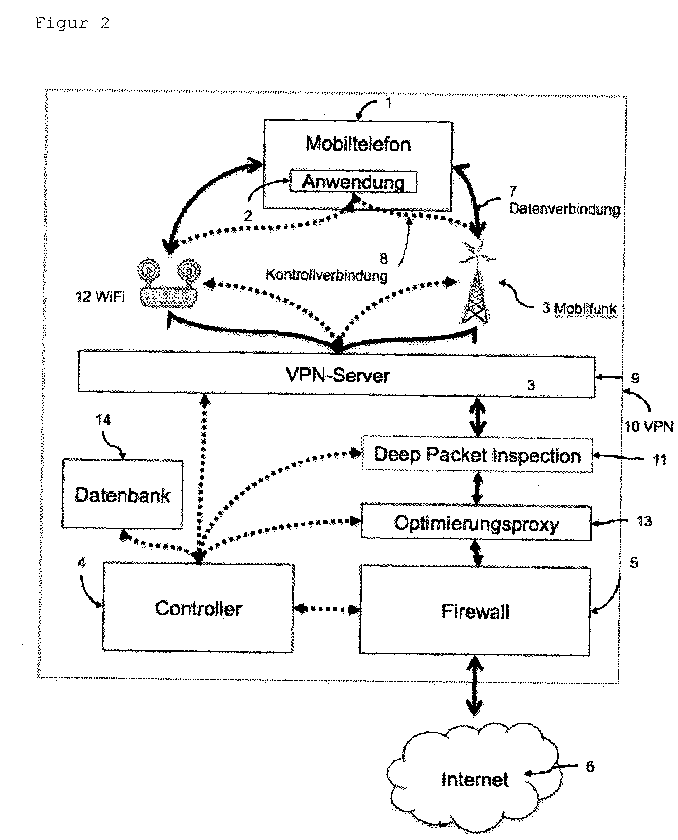

Fig. 2 eine beispielhafter Benutzeroberfläche zur Anzeige einer neuen Verbindungsanfrage;

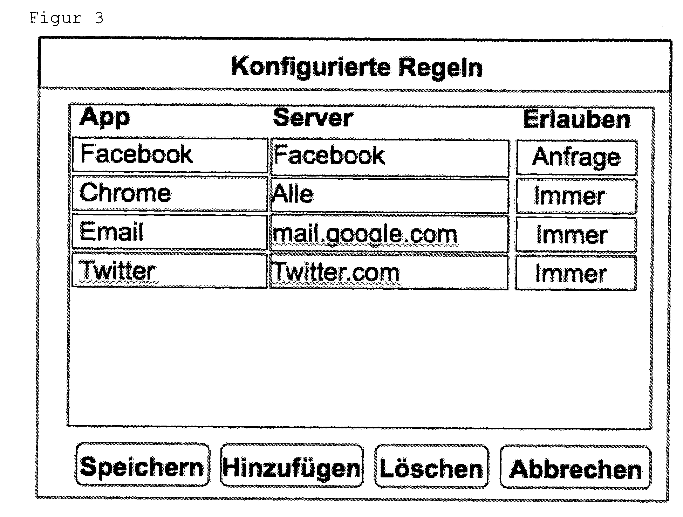

Fig. 3 eine beispielhafter Benutzeroberfläche zur Konfiguration der Regeln;

Anhand der Figuren wird ein Ausführungsbeispiel des erfindungsgemäßen Verfahrens zur verbesserten Kontrolle über den Datenfluss zwischen einem Mobiltelefon und dem Internet beschrieben.

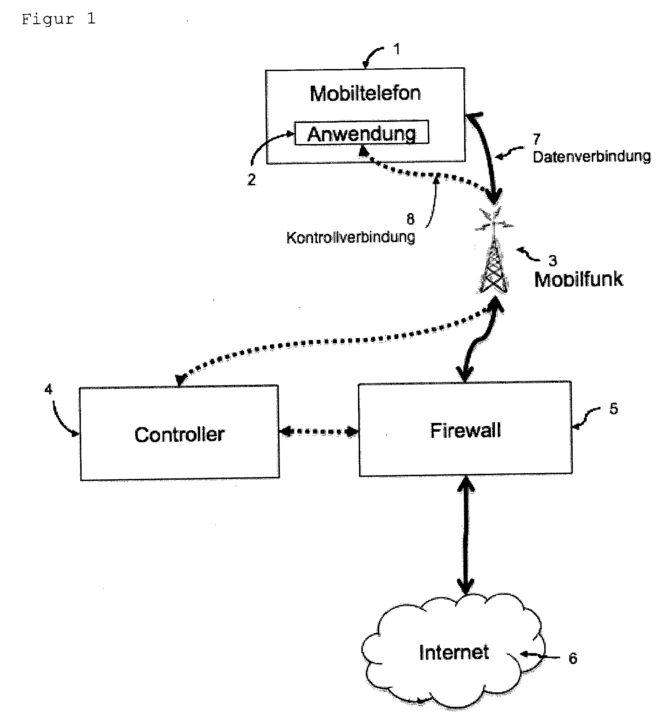

Das Verfahren führt, wie in Figur 1 ersichtlich, eine Anwendung 2 auf dem Mobiltelefon 1 und einen Firewall 5 auf einem Server im Netzwerk zusammen. Entweder auf dem selben Server wie der Firewall 5 oder einem separaten Server befindet sich ein Controller 4, der den Firewall steuert und mit der Anwendung 2 auf dem Mobiltelefon kommuniziert. Hierbei ist es nötig, dass die Anwendung 2 sich beim Controller 4 als Nutzer registriert und daraufhin einen beidseitigen Kommunikationskanal 8 aufbaut (in Figur 1 und 2 als gestrichelte Linien dargestellt). Dieser kann beispielshaft als Internet-Socket implementiert sein, aber es ist auch möglich, die jeweiligen nativen Push-Notifikationsdienste der jeweiligen Plattform zu nutzen. Des weiteren ist es nötig, dass der Datenfluss 7 (in Figur 1 und 2 als durchgehende Linien dargestellt) des Mobiltelefons durch den Firewall-Server geleitet wird. Hierzu muss der Firewall-Server entweder in der Infrastruktur des Internet-Service-Providers aufgestellt sein, wie es in Mobilfunknetzen 3 üblich ist. In einem bevorzugten Anwendungsbeispiel befindet sich der Firewall 5 in einem so genannten bekannten Virtual-Private-Network (VPN) 10 und die Anwendung 2 baut direkt bei Anwendungsstart eine VPN-Verbindung zum VPN-Server 9 auf, die sicherstellt, dass alle Datenkommunikation 7 vom Mobiltelefon durch das VPN 10 und somit nur über den Firewall 5 ins Internet gelangt. Hierdurch kann die Erfindung gleichermaßen ihre Vorteile in einer Mobilfunkdatenverbindung 3 und einer W-LAN Datenverbindung 12 ausspielen.
Über den Kontrollkanal 8 übergibt die Anwendung die erwünschten Firewall-Regeln an den Server. In einem bevorzugten Anwendungsbeispiel besagen die initialen Regeln, dass keinerlei Datenverkehr vom Mobiltelefon 1 zum Internet 6 stattfinden darf.

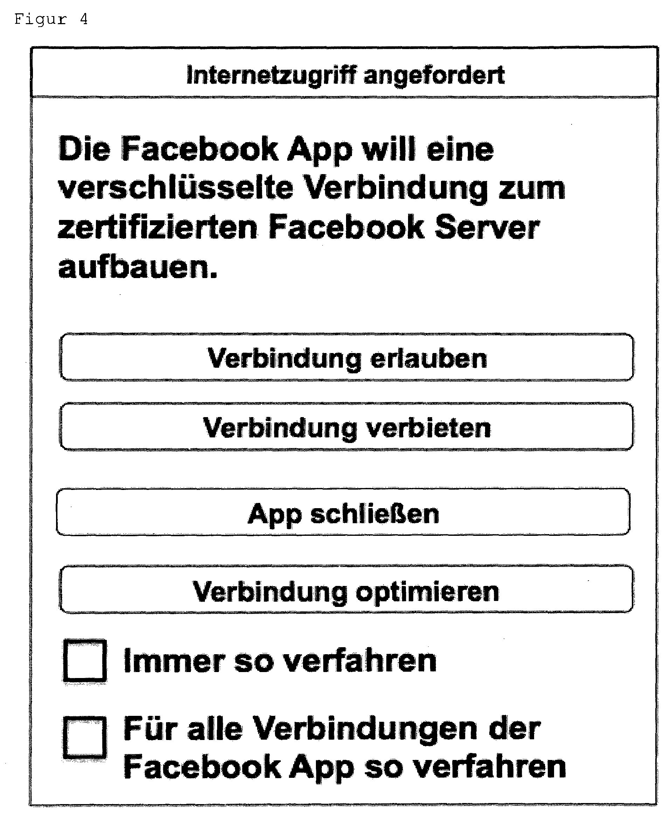

Erkennt nun der Firewall 5, dass ein Datenpaket über die Datenverbindung 7 vom Mobiltelefon 1 ins Internet 6 versendet wird, so schickt der Firewall 5 eine Nachricht zur Anwendung 2, die diese wiederum dem Nutzer in leicht verständlicher Form anzeigt, wie in Figur 3 illustriert. Der Nutzer kann auf diese Weise den Datenverkehr zulassen, dauerhaft erlauben oder dauerhaft unterbinden und beispielshaft auch die Applikation schließen.
In einem bevorzugten Anwendungsbeispiel wird der Firewall mit der bekannten Technologie der Deep-Packet-Inspection 11 angereichert, die weitere Aufschlüsse über die genaue Art des angeforderten Datenverkehrs gibt. Darüber hinaus ist es wünschenswert, dass der Firewall 5 die Ziel-IP-Adressen in Dienstnamen umwandeln kann und somit beispielhaft den Nutzer informieren, dass Daten von der Webseite einer bestimmten Tageszeitung angefordert werden. Die Deep-Packet-Inspection 11 kann auch Aufschluss darüber geben, welcher Art diese Daten sind, z.B. ob es sich um Email Daten, Bilder oder anderes handelt. Die Anwendung 2 auf dem Mobiltelefon 1 kann wiederum Information darüber liefern, welche anderen Anwendungen gerade auf dem Mobiltelefon 1 aktiv sind und somit Daten anfragen können. Falls es das Betriebssystem des Mobiltelefons 1 zulässt, kann die Anwendung 2 sogar genau sagen, welche Anwendung gerade eine Datenverbindung aufbaut. Im Zusammenspiel dieser verschiedenen Datenquellen kann auch dem technisch unversierten Nutzer über den beispielhaften Dialog in Figur 3 verdeutlicht werden, welcher Dienst Daten welcher Art gerade anfordert. So wird der Nutzer befähigt, eigenständig darüber zu entscheiden, welcher Datenverkehr über die Datenverbindung 7 zugelassen werden soll. Die Entscheidung des Nutzers wird in Form einer neuen Regel von der Anwendung an den Controller 4 übertragen und durch diesen auf dem Firewall 5 umgesetzt. Der Nutzer kann wiederum über einen geeigneten Dialog in der Anwendung 2 diese Regeln auch nachträglich sehen, löschen und bearbeiten, wie in Figur 4 beispielhaft dargestellt.

Es ist sinnvoll, die Einstellungen des Nutzers auf dem Server in einer Datenbank 14 zu speichern. Ebenfalls ist es sinnvoll, die einzelnen Regeln bestimmten Profilen zuzuordnen. So kann die Anwendung bei einer Verbindung im Ausland automatisch andere Verbindungen zulassen als bei einer Verbindung im Inland.

Die Erkennung des Datentyps ermöglicht dem Firewall auch, manche Datenarten gezielt in Echtzeit zu transformieren. Dies kann zu Zwecken der Performanz erfolgen, z.B. bei der Umwandlung von Bildern in Bilder mit einer niedrigeren Auflösung. Ebenso kann eine Umwandlung oder ein Blockieren von Datenflüssen in Abhängigkeit der Kosten der jeweiligen Verbindung sinnvoll sein. Zu diesem Zweck überträgt die Anwendung 2 in einer bevorzugten Ausführung die derzeitige Verbindungsart (Mobilfunk oder WLAN) and den Controller. Die Aufgabe der Datenumwandlung übernimmt in einer bevorzugten Ausführung der Optimierungsserver 13, der als Einzelkomponente Stand der Technik ist und in vielen Mobilfunknetzen Anwendung findet. Ebenso ist eine Anonymisierung der Daten des Nutzers möglich, z.B. wenn so genannte Cookie-Daten herausgefiltert werden. Wenn das Virtual Private Network aus mehreren Servern an verschiedenen Standorten ausgebildet ist, die jeweils über mit einander verbundene Firewalls mit dem Internet verbunden sind, ist es in einem bevorzugten Anwendungsbeispiel möglich, dass die Daten von verschiedenen Firewalls ins Internet geleitet werden können. Auf diese Weise kann die Privatsphäre des Nutzers vor Internetdiensten geschützt werden, die von der öffentlichen IP-Adresse eines Nutzers auf dessen Standort schließen. Bei all diesen Möglichkeiten des Servers bleibt es ausbildendes Merkmal dieser Erfindung, dass der Nutzer über die Anwendung eine gezielte Einstellung tätigen kann.

Ebenso können selbstverständlich auch Datenanfragen aus dem Internet zum Mobiltelefon vom Firewall analysiert und dem Nutzer zu Prüfung weitergegeben werden, bevor sie entweder akzeptiert oder abgelehnt werden.

## Patentansprüche

1. Verfahren zur Kontrolle des Datenfluss zwischen einem mit mindestens einer Anwendung versehenen Mobiltelefon und dem Internet bei dem der gesamte Datenfluss des Mobiltelefons über einen Firewall als separatem Server im Internet geleitet wird und das Mobiltelefon sich bei einer auf der Firewall vorgesehenen Anwendung registriert,bei dem die Anwendung auf dem Mobiltelefon Nachrichten betreffend die Regeln zur Steuerung des Datenflusses zur Anwendung auf dem Firewall sendet, **dadurch gekennzeichnet, dass** die Anwendung auf der Firewall auf der Basis der angeforderten Verbindungen von und zum Mobiltelefon und auf der Basis in dieser Anwendung hinterlegten Regeln die diese Regeln betreffenden Nachrichten mit der Anwendung auf dem Mobiltelefon in beiden Richtungen austauscht und damit dessen Internetverbindung steuert.

2. Verfahren nach Patentanspruch 1, **dadurch gekennzeichnet dass** diese Nachrichten von der Firewall auf dem Mobiltelefon angezeigt werden

3. Verfahren nach Patentanspruch 1 oder 2, **dadurch gekennzeichnet, dass** die Anwendung auf dem Firewall die durchlaufenden Daten auch mit Deep Packet Inspection analysiert.

4. Verfahren nach den Patentansprüche 1-3, **dadurch gekennzeichnet, dass** die Anwedung auf dem Mobiltelefon ein Virtual Private Network zu dem Server mit dem installierten Firewall herstellt.

5. Verfahren nach einem oder mehreren der Patentansprüche 1 - 4, **dadurch gekennzeichnet, dass** die Regeln auf dem Firewall per Voreinstellung keinerlei Datenverbindung zwischen dem Mobiltelefon und dem Internet ohne Erlaubnis des Anwenders gestatten.

6. Verfahren nach einem oder mehreren der Patentansprüche 1 - 5, **dadurch gekennzeichnet, dass** die Datenpakte vom Firewall nach dem Zielserver kategorisiert werden.

7. Verfahren nach einem oder mehreren der Patentansprüche 1 - 6, **dadurch gekennzeichnet, dass** die Anwendung auf dem Mobiltelefon die Datenkommunikation mit Information zur Applikation, die die Datenkommunikation erzeugt, anreichert.

8. Verfahren nach einem oder mehreren der Patentansprüche 1 - 7, **dadurch gekennzeichnet, dass** die Anwendung auf dem Firewall die Datenkommunikation entsprechend dem Inhalt kategorisiert.

9. Verfahren nach einem oder mehreren der Patentansprüche 1 - 8, **dadurch gekennzeichnet, dass** die Anwendung auf dem Mobiltelefon Regeln anhand des derzeitigen Standorts definiert.

10. Verfahren nach einem oder mehreren der Patentansprüche 1 - 9, **dadurch gekennzeichnet, dass** die Anwendung auf dem Mobiltelefon Regeln anhand der derzeitigen Verbindungsart definiert.

11. Verfahren nach einem oder mehreren der Patentansprüche 1 - 10, **dadurch gekennzeichnet, dass** die Anwendung auf dem Mobiltelefon Regeln anhand der derzeit geltenden Tarifkonditionen der Internetverbindung, wie etwa einer Auslandsverbindung, definiert.

12. Verfahren nach einem oder mehreren der Patentansprüche 1 - 11, **dadurch gekennzeichnet, dass** die Anwendung auf dem Firewall die Datenkommunikation je nach Datenart und entsprechend der hinterlegten Regeln verarbeitet.

13. Vorrichtung zur Kontrolle über den Datenfluss zwischen einem Mobiltelefon und dem Internet mit einen Firewall als separatem Server im Internet, durch den der gesamte Datenfluss des Mobiltelefons fließt und einer Anwendung auf dem Firewall, bei der sich die verbundenen Mobiltelefone registrieren **dadurch gekennzeichnet, dass** die Anwendung auf dem Firewall auf der Basis der angeforderten Verbindungen von und zum Mobiltelefon und der hinterlegten Regeln Nachrichten an eine Anwendung auf dem Mobiltelefon sendet und auf der Basis der empfangenen Befehle von der Anwendung auf dem Mobiltelefon die Internetverbindung steuert; und dass eine Anwendung auf dem Mobiltelefon vorgesehen ist, die die Nachrichten vom Firewall empfängt, die auf dem Firewall befindlichen Regeln dem Anwender anzeigt, sowie dem Anwender ermöglicht neue Regeln an den Firewall zu schicken;
